(19) Europäisches Patentamt

European Patent Office

Office européen des brevets

(11) Numéro de publication: **0 298 822 B1**

(12) **FASCICULE DE BREVET EUROPEEN**

(45) Date de publication de fascicule du brevet: **03.11.93**

(51) Int. Cl.5: **C22C 5/04**, C03B 5/16, C03B 37/095

(21) Numéro de dépôt: **88401597.5**

(22) Date de dépôt: **24.06.88**

(54) **Procédé et utilisation dans l'industrie verrière, notamment pour la protection de pièces contre la corrosion par le verre fondu d'alliages à base de palladium contenant de l'étain.**

(30) Priorité: **26.06.87 FR 8709081**

(43) Date de publication de la demande:
**11.01.89 Bulletin 89/02**

(45) Mention de la délivrance du brevet:
**03.11.93 Bulletin 93/44**

(84) Etats contractants désignés:
**BE DE ES FR GB GR IT NL SE**

(56) Documents cités:
**DE-C- 961 762**
**FR-A- 2 349 658**

(73) Titulaire: **COMPTOIR LYON-ALEMAND - LOUYOT**
**13 rue de Montmorency**
**F-75139 Paris Cédex 03(FR)**

(72) Inventeur: **Guerlet, Jean-Paul**
**11, rue Paul Bert**
**F-75011 Paris(FR)**
Inventeur: **Hilger, Jean-Pierre**
**13, Place des Louvetiers**
**F-54410 La Neuveville(FR)**

(74) Mandataire: **Portal, Gérard et al**
**Cabinet Beau de Loménie**
**158, rue de l'Université**
**F-75340 Paris Cédex 07 (FR)**

## Description

L'invention concerne un procédé pour la protection contre la corrosion de pièces utilisées dans l'industrie verrières susceptibles d'être en contact avec le verre fondu et les pièces ainsi obtenues.

L'industrie verrière est, depuis son origine, confrontée au problème de la tenue en corrosion des éléments en contact avec le verre fondu. En effet, les parties métalliques des installations industrielles travaillent à l'air et à des températures variables suivant le type de verre mais généralement comprises entre 1100°C et 1400°C. Or il n'existe que très peu de métaux capables de résister à un environnement aussi sévère, en présentant à la fois une bonne résistance à l'oxydation, une bonne résistance à la corrosion par la verre fondu et des caractéristiques mécaniques suffisantes à ces températures.

Ces contraintes sévères expliquent l'utilisation quasi-systématique d'alliages de platine dans tous les cas où la résistance à la corrosion est le facteur primordial. Les filières de fibrage pour la fabrication de fibres de verre sont l'un des meilleurs exemples dans la mesure où la conjonction des trois facteurs précédemment cités et de stricts critères de qualité pour le produit final conduit à l'utilisation exclusive d'alliages Pt Rh 10 % à Pt Rh 20 %.

Cependant, si les qualités des alliages de platine sont reconnues depuis fort longtemps pour les applications verrières, le coût des métaux précieux en a toujours limité l'usage et a toujours été un moteur puissant pour les recherches visant à mettre au point des matériaux de substitution.

C'est ainsi que plusieurs familles d'alliages ont été étudiées, sons que ces études débouchent sur des solutions effectivement utilisables en lieu et place des alliages de platine rhodium.

Les aciers inoxydables ne présentent pas des caractéristiques suffisantes, les études ont été orientées vers l'utilisation de superalliages à base nickel-chrome, du même type que ceux développés pour l'aéronautique. Les caractéristiques mécaniques à chaud, et en particulier le tenue au fluage, obtenues avec ces alliages dans les dernières années sont remarquables.

Elles sont très nettement supérieures à celles des alliages de platine rhodium classique tout au moins jusqu'à 1200°C et sensiblement meilleures que celles des alliages de platine renforcés par dispersion d'oxydes. Par ailleurs, la résistance à l'oxydation de ces superalliages a été améliorée par l'addition d'éléments très oxydables comme par exemple l'aluminium. Ces additions ont pour fonction de former une couche superficialle d'oxyde qui protège le métal de base.

Cependant, du fait de discontinuités plus ou moins importantes dans cette couche superficielle, la protection est très imparfaite. La dégradation de la résistance à l'oxydation est d'autant plus marquée que la température augmente et devient incompatible avec une utilisation industrielle au dessus de 1200°C.

En outre, la résistance à la corrosion par les verres fondus de ce type d'alliages reste très insuffisante. En effet, au contact métal-verre, des réactions complexes interviennent entre les oxydes du verre et les oxydes superficiels. Ces réactions entraînent la disparition de la couche protectrice et provoquent une corrosion accélérée du métal de base.

C'est pourquoi, bien que présentent d'excellentes caractéristiques mécaniques, les alliages de ce type ne sont plus utilisables dans l'industrie verrière dès que la température dépasse 1200°C ou que les critères de qualité du verre rendent prohibitive toute corrosion marquée des matériaux métalliques.

Pour tenter de remédier à ces inconvénients majeurs des alliages platine-rhodium et des alliages inoxydables, des recherches ont été effectuées par l'inventeur sur une autre famille d'alliages de substitution : les alliages à base de palladium en raison du fait que, bien qu'il soit un métal précieux appartenant au groupe des platinoïdes, le coût du palladium est nettement plus faible que celui du platine.

Cette recherche d'alliages de substitution à base de palladium allait à l'encontre de l'enseignement de l'homme du métier étant donné que l'utilisation des alliages de palladium était jusqu'à présent impossible dans l'industrie verrière du fait de la corrosion notable de ces alliages au contact des verres fondus.

En effet, les expériences montrent que le palladium pur ou les alliages palladium-platine contenant jusqu'à 50 % de platine présentent au contact d'un verre fondu classique (verre sodocalcique ou verre E) une corrosion intergranulaire marquée. Un gravage superficiel des joints de grains est observable après seulement quelques dizaines d'heures d'essais. Lorsque la durée d'exposition augmente, l'attaque intergranulaire devient de plus en plus importante, ce qui entraîne une fragilisation mécanique inacceptable en utilisation.

Par ailleurs, bien que l'oxyde de palladium ne soit pas stable à haute température (T supérieur à 800°C), le comportement du palladium en atmosphère oxydante et à des températures supérieures à 1000°C n'est pas totalement satisfaisant. Le palladium présente, à la différence du platine, la propriété de dissoudre une quantité notable d'oxygène lorsque la température augmente. Ceci entraîne une oxydation interne des diverses impuretés non nobles contenues dans le métal de base. En pratique, il en résulte une fragilisation du palladium ce qui explique que sa ductilité chute de façon importante à haute température.

Le même phénomène se produit dans les alliages palladium-platine jusqu'à des teneurs en platine de 50 % en poids.

Ainsi, la présente invention a pour but de résoudre les inconvénients précités des alliages platine-rhodium ou inoxydables, en proposant l'utilisation d'une famille d'alliages de substitution présentant une résistance à la corrosion par le verre fondu acceptable, qui ait de préférence sensiblement équivalente à celle des alliages platine-rhodium 10 %, possèdent ainsi des caractéristiques d'emploi sensiblement identiques à celles des alliages platine-rhodium 10 % généralement utilisés, et dont le coût de fabrication est diminué de façon importante comparativement aux alliages connus.

La présente invention a encore pour but de résoudre le nouveau problème technique consistant en la fourniture d'une famille d'alliages de substitution à base de palladium ayant une résistance à la corrosion par le verre fondu acceptable, de préférence sensiblement équivalente à celle des alliages platine-rhodium 10 %, avec simultanément de bonnes propriétés mécaniques à la température ambiante et à chaud, et notamment une bonne résistance au fluage en particulier à chaud, notamment dans les conditions d'utilisations industrielles de 1100 ° C-1400 ° C.

La présente invention permet de résoudre tous ces problèmes techniques pour la première fois d'une manière satisfaisante.

Ainsi, selon un premier aspect, la présente invention concerne un procédé pour la protection contre la corrosion par le verre fondu de pièces utilisées dans l'industrie verrière, caractérisé en ce qu'il consiste à réaliser au moins partiellement lesdites pièces, notamment au niveau des parties susceptibles d'être en contact avec le verre fondu, en un alliage, éventuellement renforcé par une phase dispersée, comprenant en poids, de 45 à 98 % de palladium, de 2 à 20 % d'étain, de 0 à 50 % de platine, de 0 à 20 % de rhodium, de 0 à 20% d'iridium et de 0 à 20 % de ruthénium, le total des constituants de l'alliage étant de 100 %.

Avantageusement, cet alliage comprend de 80 à 95 % en poids de palladium.

Selon un mode de réalisation préféré, cet alliage comprend de 2 à 20 % d'étain, de préférence de 5 à 18 %, encore de préférence de 5 à 16 %, et encore de mieux de 10 à 15 %, en poids d'étain.

Selon un mode de réalisation particulièrement avantageux, cet alliage à base de palladium et contenant de l'étain, comprend en outre au moins l'un des éléments suivants en pourcentage en poids :
-   platine : 0-50
-   rhodium : 0-20, de préférence 5 - 10
-   iridium : 0-20, de préférence 5 - 10
-   ruthénium 0-20, de préférence 5 - 10

Par ailleurs, selon une caractéristique particulière de l'invention, lorsque le platine est présent dons l'alliage selon l'invention, il constitue le solde de l'alliage.

Selon un premier mode de réalisation particulier, l'alliage selon l'invention est un alliage binaire palladium-étain.

Selon un autre mode de réalisation, cet alliage est un alliage ternaire palladium-platine-étain.

Un alliage possible est un alliage platine 45, palladium 40, étain 10, rhodium 5.

Selon encore un autre mode de réalisation particulier, cet alliage est renforcé par la formation d'une phase dispersée par l'emploi de procédés d'élaboration de matériaux à phases dispersée déjà connus, qu'il s'agisse d'un durcissement structural, d'une métallurgie des poudres, d'une projection à la flamme, etc.

Selon une autre réalisation avantageuse de l'alliage selon l'invention, celui-ci est caractérisé en ce qu'il est préparé par fusion sous vide.

Selon un deuxième aspect, la présente invention concerne l'utilisation de ces alliages dans l'industrie verrière pour la réalisation de pièces en contact avec le verre fondu, qui est de préférence un verre sensiblement exempt d'oxyde moins stable que l'oxyde d'étain, comme l'oxyde de plomb.

Enfin, selon un troisième aspect, la présente invention concerne les pièces utilisées dans l'industrie verrière, susceptibles d'être en contact avec le verre fondu, dont au moins certaines parties, notamment les parties susceptibles d'être en contact avec le verre fondu sont réalisées en un alliage à base de palladium contenant de l'étain tel que défini précédemment.

L'invention est basée sur la découverte tout à fait surprenante pour l'homme du métier, que l'addition d'une teneur en étain à des alliages à base de palladium confère aux alliages ainsi obtenus une résistance à la corrosion par les verres fondus acceptable, cette résistance à la corrosion étant sensiblement équivalente à celle des alliages platine-rhodium 10 % lorsque la teneur en étain est comprise entre 2 et 20 %.

Certains des alliages utilisés dans le cadre de la présente invention sont connus dans l'état de la technique, mais n'ont jamais été préconisés pour protéger les pièces contre la corrosion par le verre fondu.

Ainsi, les document DE-961 762 et FR-2 349 658 révèlent des alliages à base de palladium comprenant de l'étain.

Il a pu être découvert que l'excellent comportement des alliages utilisés est dû à la suppression de la corrosion intergranulaire observée sur le palladium et les alliages palladium-platine. On explique ce phénomène de le façon suivante sans vouloir se limiter à cette explication.

Les impuretés très oxydables (Al, Mg, etc) présentes dans le métal de base subissent en général une ségrégation aux joints de grains. En présence de verre fondu, dont certains oxydes peuvent être réduits par ces impuretés, des réactions d'oxydo-réduction se produisent.

Dès lors, le silicium, en particulier, libéré dans ces réactions, peut diffuser et former de façon très localisée aux joints de grains des phases Pd Si, liquides à ces températures. Ces phases se dissolvent dans le verre fondu et initient alors une réaction en chaîne oxydo-réduction-dissolution des phases Pd Si qui conduit à le corrosion intergranulaire mise en évidence par les observations expérimentales.

Or, l'addition d'étain modifie fondamentalement les réactions qui se produisent. Dans ce cas, les impurités ségrégées aux joints de grains réagissent avec les oxydes d'étain formés dans le couche superficielle.

La réduction de la silice continue dans le verre ne peut plus avoir lieu, ce qui supprime la réaction en chaîne qui était à l'origine de la corrosion intergranulaire.

Mais, il est important de noter qui le tenue en corrosion de ces alliages n'est assurée que dans des verres ne contenant pas d'oxyde moins stable que l'oxyde d'étain. Dans le cas contraire, les oxydes seront réduits par l'étain et les éléments métalliques ainsi libérés pourront diffuser dans les joints de grains du métal. Ceci se produit en particulier dans le ces des verres de cristallarie contenant de l'oxyde de plomb. La corrosion de ces alliages dans des verres de ce type est extrêmement rapide. C'est pourquoi dans cette utilisation, il est préféré que la verre soit sensiblement exempt d'oxyde moins stable que l'oxyde d'étain, comme l'oxyde de plomb.

On a également pu observer d'une manière inattendue que l'addition d'une teneur supérieure à environ 5 % d'étain permet également d'améliorer le comportement à température élevée et à l'air de ces alliages selon l'invention. Dans les conditions d'utilisations industrielles (1100 °C-1200 °C), il a pu être mis en évidence une oxydation externe de l'étain. La couche d'oxyde formée au bout de quelques dizaines de minutes est continue, d'une épaisseur de 5 a 10 micromètres, et bloque efficacement toute diffusion ultérieure d'oxygène. Elle offre ainsi une excellente protection de la matrice contre une oxydation généralisée. De ce fait, l'oxydation interne aux joints de grains des impuretés continues dans la matrice et son incidence sur la ductilité à chaud de ces alliages sont complètement supprimées.

Les caractéristiques mécaniques à l'ambiante des alliages selon l'invention sont plus élevées que celles des alliages platine-rhodium 10 %. Leur ductilité à température ambiante est excellente ce qui permet d'effectuer des transformations nécessaires dons des conditions parfaitement classiques, sans différence notable avec les alliages platine-rhodium 10 %. Les caractéristiques mécaniques à chaud et tout particulièrement la tenue au fluage dépendant de la teneur en étain et des éventuelles additions supplémentaires.

Dans la gamme de températures utilisées pour les applications verrières visées par les alliages de la présente invention, le résistance au fluage des alliages binaires palladium-étain est équivalente à celle du platine mais reste plus faible que celle des alliages platine-rhodium 10 %. Cependant, compte tenu des différences importantes de densité et de coût métal, ces alliages présentent un rapport caractéristique en fluage-coût très favorable.

La résistance au fluage, importante en particulier dans le cas des filières de fibrage, peut être notablement améliorée dans les alliages suivant l'invention au moyen d'additions particulières ou de procédés classiques d'élaboration.

C'est pourquoi, selon une caractéristique particulière de l'invention, permettant d'améliorer les résistances mécaniques des alliages selon l'invention, et notamment la résistance au fluage, à haute température, l'invention préconise l'addition d'éléments platinoïdes (0 à 50 % en poids de platine ; 0 à 20 % en poids de rhodium ; 0 à 20 % en poids d'iridium ; 0 à 25 % en poids de ruthénium) ces additions étant réalisées ensemble ou séparément .

Bien entendu, les teneurs de ces éléments sont déterminées en fonction de l'intérêt économique recherché.

D'une façon générale, la teneur en palladium des alliages conformes à l'invention sera comprise entre 45 et 98 %, de préférence entre 80 et 95 % en poids. En d'autres termes, les additions représenterent généralement de 2 à 55 % en poids de l'alliage, et de préférence de 5 à 20 % en poids.

Les alliages selon l'invention peuvent également être renforcés au moyen d'une phase dispersée. Cette technique est bien connue de l'homme de l'art pour être déjà industriellement utilisée pour un certain nombre de matériaux destinés aux hautes températures (superalliage, alliage platine-rhodium). Les procédés d'éleboration de matériaux à phases dispersées déjà connus peuvent s'appliquer aux alliages selon l'invention : durcissement structural, métallurgie des poudres, projection à la flamme.

L'invention sera illustrée plus en détail par les exemples suivants donnés à titre non limitatif de la portée de l'invention. Dans les exemples, tous les pourcentages sont donnés en poids, sauf indications contraires.

EXEMPLE 1

On prépare par fusion sous vide un alliage palladium-étain contenant 10 % en poids d'étain.

Le lingotin est forgé à chaud à une température de 1200°C jusqu'à une épaisseur de 10 mm. Il est ensuite laminé à froid jusqu'à 1 mm. Les caractéristiques mécaniques à température ambiante sur l'état écroui 400 % et sur un état recuit 30 mn à 1150°C sont donnés dons le tableau I.

Compte tenu de l'absence de matériau à forte densité comme le platine, la densité de l'alliage est de 11,6 (soit 60 % de celle du Pt Rh 10 %). Ces matériaux présentent d'excellentes caractéristiques d'emploi à l'air et à haute température. L'oxydation de l'étain, n'entraîne pas de modifications importantes des propriétés du matériau.

Dans la mesure où ces matériaux peuvent, en utilisation, être chauffés par effet Joule, l'évolution de la résistance en température est donnés dans le tableau II.

Comme cela a été déjà mentionné, les propriétés en fluage de ces matériaux sont d'une grande importance pour leur utilisation dans l'industrie verrière. La mesure de la résistance de fluage est effectuée à l'aide d'essais de fluage en traction sur des éprouvettes plates d'épaisseur 1 mm à 1000°C et 1200°C. Par ailleurs, les caractéristiques de fluage en flexion sont déterminées à 1200°C sur des éprouvettes plates d'épaisseur variable (de 0,7 à 1,5 mm).

L'ensemble des résultats de fluage est regroupé dans le tableau III en comparaison avec le platine et les alliages platine rhodium 10 %.

Le caractérisation des matériaux en présence du verre fondu a été réalisée à l'aide de trois essais de comportement :

- un test statique de corrosion par la verre fondu à température constante (1200°C) pendant des durées de 100 à 500 heures. Dans ce test une plaquette du matériau est plongée dans le verre liquide, l'ensemble étant en température dans un four. Après le test des observations macrographiques et micrographiques permettent d'apprécier la coloration éventuelle du verre, les phénomènes de corrosion dans le verre fondu et à l'interface métal-verre fondu-air. L'alliage Pd Sn 10 % testé dans ces conditions jusqu'à 500 heures à 1200°C n'a entraîné aucune coloration du verre E. La partie métallique immergée dans le verre ne présente aucune corrosion. En ce qui concerne l'interface métal-verre fondu-air, un léger gravage apparaît après le test. Les observations micrographiques montrent qu'il s'agit d'une faible corrosion aux joints de grains sur une profondeur ne dépassent pas 10 $\mu$m. Un échantillon de palladium, testé dans les mêmes conditions, montre une corrosion fissurante très importante, pénétrant de plusieurs centaines de microns dans l'épaisseur du matériau ;

- un test de corrosion en présence de verre fondu sur une plaquette chauffée par effet Joule. L'utilisation du chauffage par effet Joule des filières dans l'industrie verrière est très généralisée. De ce fait, l'influence éventuelle du courant électrique sur la corrosion par le verre fondu est étudiée par ce type de test, L'essai est réalisé an chauffant une plaquette d'épaisseur 0,5 mm par un courant alternatif sous une densité de courant de 40 mA/cm$^2$. Sur la plaquette est déposée une petite quantité de verre qui est fondue par l'échauffament de la plaquette.

La température est mesurée par un thermocouple qui plonge dans le verre liquide. Le test est effectué à deux températures (1200°C et 1350°C) pendant une durée de 72 h. Les conditions générales des tests (densité de courant, température) ont été choisies comme représentatives des conditions d'emploi dans l'industrie verrière. Du fait de partes thermiques nettement plus importantes dans le test qu'en utilisation industrielle, la densité du courant est d'ailleurs assez nettement plus élevée que celle normalement employée industriellement. De ce fait, la sévérité du test est encore plus importante. L'alliage Pd Sn 10 % testé dans ces conditions n'a pas présenté de corrosion décelable : pas de coloration du verre, pas de corrosion dans la zone en présence du verre fondu, légère corrosion à l'interface triple du même type que précédemment. Le test montre que le matériau ne présente pas de corrosion électrochimique du fait du courant électrique de chauffage ;

- un test de comportement de type prototype. Cet essai est réalisé sur un creuset de capacité d'environ 500 cm$^3$. Le fond du creuset est formé par une filière permettant de fibrer le verre. Le comportement global du matériau, apprécié au travers des conditions de conduite de l'installation et d'une expertise après l'essai, a été satisfaisant.

EXEMPLE 2

On prépare par fusion sous vide un alliage palladium-étain contenant 15 % en poids d'étain.

Le lingotin est forgé a chaud à une température de 1200°C jusqu'à une épaisseur de 10 mm. Il est ensuite laminé à froid jusqu'à 1 mm. Les caractéristiques mécaniques à température ambiante sur l'état écroui 400 % et sur un état recuit 30 mn à 1150°C sont donnés dans le tableau I.

Le résistance au fluage de cet alliage mesurée sur des éprouvettes plates d'épaisseur 1 mm est donnée dans le tableau III en comparaison avec le platine et les alliages platine-rhodium 10%.

Les tests de corrosion dans le verre E et le verre sodocalcique ont été effectués à 1200°C pendant 16 jours. Après essais, les échantillons ne présentaient aucun signe de corrosion. Le palladium testé dans les mêmes conditions a révélé une attaque intergranulaire très marquée.

EXEMPLE 3

On prépare par fusion sous vide un alliage palladium-étain-rhodium contenant 15 % en poids d'étain et 5 % de rhodium. Cet alliage est transformé et testé dans les mêmes conditions que l'exemple 1.

Les caractéristiques mécaniques à froid (tableau I) et la résistance au fluage (tableau IV) montrent l'influence de l'addition du rhodium.

EXEMPLE 4

On prépare par fusion sous vide un alliage platine-palladium-étain contenant 40 % en poids de palladium et 10 % en poids d'étain. Cet alliage est transformé et testé dans les mêmes conditions que l'exemple 1.

L'addition d'une quantité importante de platine ne modifie que faiblement les caractéristiques mécaniques à froid. Par contre, l'augmentation de la résistance au fluage est importante (tableau IV). Les tests de corrosion dans le verre fondu, effectués comme dans l'exemple 1, ont montré l'absence de toute corrosion. Il est important de noter que l'alliage PtPd contenant 50 % en poids de platine testé dans les mêmes conditions présente un début de corrosion notable.

EXEMPLE 5

On prépare par fusion sous vide un alliage platine-palladium-étain-rhodium de composition Pt 45 % Pd 40 % Sn 10 % Rh 5 % en poids. Cet alliage du fait d'une dureté importants nécessite une gamme de transformation différente de celle utilisée pour les exemples précédents.

Le lingotin est forgé à chaud à une température de 1200°C jusqu'à une épaisseur de 10 mm. Il est laminé à froid jusqu'à 8 mm, recuit 30 mn à 1150°C, trempé à l'eau et enfin laminé à froid jusqu'à 1 mm.

Les caractéristiques mécaniques sont notablement augmentées par l'addition de rhodium, aussi bien à l'ambiante (tableau I) qu'à haute température (tableau IV).

EXEMPLES 6 à 15

On prépare par fusion sous vide une série d'alliages à base de palladium dont les compositions sont regroupées dans le tableau (V).

Les lingotins sont forgés à chaud à une température de 1200°C jusqu'à une épaisseur de 10 mm. Ils sont ensuite laminés à froid jusqu'à 1 mm. Le résistance au fluage des alliages est mesurée sur des éprouvettes plates d'épaisseur 1 mm. Les caractéristiques de ces différents alliages sont indiquées dans le tableau. Ces valeurs mettent en évidente l'amélioration de résistance au fluage qu'amènent les additions, tout particulièrement de rhodium et de ruthénium.

Des tests de corrosion dans le verre E sont effectués à 1200°C pendant 100 h. Après essais, les échantillons sont observés par microscopie et ne présentent aucun signe de corrosion décelable.

Les alliages conformes à l'invention, qui viennent d'être décrits, permettent de réaliser et de protéger contre la corrosion par le verre fondu les pièces utilisées dans l'industrie verrière. A cet effet, on conçoit aisément que ces pièces soient réalisées, au moins partiellement, notamment eu niveau des parties susceptibles d'être en contact avec le verre fondu, qui est de préférence un verre sensiblement exempt d'oxyde moins stable que l'oxyde d'étain, comme l'oxyde de plomb, on un alliage tel que défini précédemment.

Les alliages conformes à l'invention ont en particulier la propriété de pouvoir être assemblés avec des alliages classiques Pt-Rh 10 %, par des techniques couramment employées par l'homme de métier, comme par exemple un soudage sous gaz inerte, (soudage T.I.G.).

Il est par conséquent possible, selon un mode actuellement préféré de l'invention, de réaliser des pièces utilisables dans l'industrie verrière, dans lesquelles une partie seulement de l'ensemble est on alliage Pt-Rh 10 %. Cette substitution partielle permet d'optimiser de la manière la plus intéressante le compromis entre les caractéristiques mécaniques à haute température et le coût des matériaux.

Il est à noter que les alliages conformes à l'invention ont la particularité d'être soudables avec eux-mêmes. Par conséquent les alliages de l'invention permettent la fabrication de pièces soudées.

EP 0 298 822 B1

## T A B L E A U  I

### CARACTERISTIQUES MECANIQUES A 20°C

| | ECROUI 400 % | | | | RECUIT | | | |
|---|---|---|---|---|---|---|---|---|
| | $R_m$ (daN/m²) | $R_p$ O,2 (daN/m²) | A % | $HV_5$ (daN/m²) | $R_m$ (daN/m²) | $R_p$ O,2 (daN/m²) | A % | $HV_5$ (daN/m²) |
| Pt | 35 | | 1 | 105 | 12 | | 32 | 40 |
| PtRh 10 | 53 | 53 | 1 | 185 | 29 | 13 | 30 | 88 |
| Pd Sn 10 | 78 | 75 | 1 | 230 | 39 | 21 | 35 | 96 |
| Pd Sn 15 | 112 | 97 | 1 | 320 | 56 | 26 | 41 | 120 |
| Pd Sn 15 Rh 5 | 123 | 120 | 1 | 360 | 69 | 47 | 22 | 180 |
| Pt Pd 40 Sn 10 | 116 | 109 | 1 | 355 | 57 | 21 | 53 | 145 |
| Pt Pd 40 Sn 10 Rh 5 | | | | 380 | | | | 200 |

TABLEAU II

| RESISTIVITE EN FONCTION DE LA TEMPERATURE ($\mu\Omega$ . cm) ($10_{-8}$ $\Omega$ . m) | | | | | | | | |
|---|---|---|---|---|---|---|---|---|
| T | 500 | 600 | 700 | 800 | 900 | 1000 | 1100 | 1200 |
| Pt | 27,5 | 31,2 | 34,3 | 37.4 | 40,3 | 43,1 | 45,8 | 48,4 |
| Pt Rh 10 % | 33,1 | 35,8 | 38,5 | 41,1 | 43,6 | 46,1 | 48,5 | 50,8 |
| Pd Sn 15 % | 48,0 | 50,4 | 52,8 | 56,0 | 58,8 | 61,2 | 64,4 | 67,2 |
| Pd Sn 10 % | 43,7 | 45,8 | 48,0 | 50,6 | 52,9 | 55,1 | 57,8 | 60,0 |

TABLEAU III

| **RESISTANCE EN FLUAGE A HAUTE TEMPERATURE** | | | | | |
|---|---|---|---|---|---|
| | Fluage en traction (1) | | | | Fluage en flexion 1200 °C . 24 h | |
| | 1000 °C | | 1200 °C | | $V_D$ (mm/h) (2) | Kep (3) |
| | 1 h | 10 h | 1 h | 10 h | | |
| Pt | 17 | 12 | - | - | - | - |
| Pt Rh 10 % | 54 | 38 | 32 | 20 | 0,015 | 1 |
| Pd Sn 15 % | 17 | 8 | 10 | 4 | 0,210 | 1,9 |
| Pd Sn 10 % | - | - | 8 | 4,5 | 0,060 | 1,6 |

(1) charge pour un temps de rupture de 1 h ou 10 h dans les conditions de test (en $N/mm^2$)
(2) vitesse de déformation dans un essai de fluage en flexion (sta de déformation stabilisée) sous une contrainte 0,3 $daN/mm^2$
(3) coefficient multiplicateur d'épaisseur pour obtenir une vitesse de déformation équivalente au Pt Rh 10 %.

## TABLEAU IV

### RESISTANCE AU FLUAGE A HAUTE TEMPERATURE

| | Fluage à 1000°C charge pour un temps de rupture de | | Fluage à 1200°C charge pour un temps de rupture de | |
|---|---|---|---|---|
| | 1 h (N/mm²) | 10 h (N/mm²) | 1 h (N/mm²) | 10 h (N/mm²) |
| Pt | 17 | 12 | - | - |
| PtRh 10 % | 54 | 39 | 32 | 20 |
| Pd Sn 15 | 17 | 8 | 10 | 4 |
| Pd Sn 15 Rh 5 | 23 | 13 | 12 | 5 |
| Pt Pd 40 Sn 10 | 28 | 17 | 12 | 6,5 |
| Pt Pd 40 Sn 10 Rh 5 | 32 | 22 | | |

EP 0 298 822 B1

TABLEAU V

| | Temps de rupture en fluage (h) | | | |
|---|---|---|---|---|
| | 1000 °C | | 1200 °C | |
| | $\rho = 16$ N/mm | $\rho = 2D$ N/mm | $\rho = 6$ N/mm | $\rho = 10$ N/mm |
| Pd Sn 5 | 4,3 | 2,4 | 8 | 1 |
| Pd Sn 10 | - | - | 3 | 0,4 |
| Pd Sn 15 | 1,6 | 0,7 | 1,7 | 0,2 |
| Pd Sn 10 Rh 5 | 4,8 | 2,1 | 10 | 1 |
| Pd Sn 10 Rh 10 | - | - | - | 7,5 |
| Pd Sn 10 Ir 5 | - | - | - | 2,3 |
| Pd Sn 10 Ir 10 | - | - | - | 1,8 |
| Pd Sn 10 Ru 5 | - | - | - | 2,6 |
| Pd Sn 10 Ru 10 | - | - | - | 1,9 |
| Pd Sn 10 Rh 10 Ru 1 | - | - | - | 1,4 |
| Pd Sn 10 Rh 10 Ru 5 | - | - | - | 0,6 |
| Pd Sn 10 Rh 10 Ir 5 | - | - | - | 7,3 |

**Revendications**

1. Procédé pour la protection contre la corrosion par le verre fondu de pièces utilisées dans l'industrie verrière, caractérisé en ce qu'il consiste à réaliser au moins partiellement lesdites pièces, notamment au niveau des parties susceptibles d'être en contact avec le verre fondu, en un alliage, éventuellement renforcé par une phase dispersée, comprenant en poids, de 45 à 98 % de palladium, de 2 à 20 % d'étain, de 0 à 50 % de platine, de 0 à 20 % de rhodium, de 0 à 20% d'iridium et de 0 à 20 % de ruthénium, le total des constituants de l'alliage étant de 100 %.

2. Procédé selon la revendication 1, caractérisé en ce que l'alliage précité comprend de 80 à 95 % en poids de palladium.

3. Procédé selon la revendication 1 ou 2, caractérisé en ce que l'alliage précité comprend, en poids de 5 à 18 % d'étain.

4. Procédé selon la revendication 1 ou 2, caractérisé en ce que l'alliage précité comprend de 5 à 16 % en poids d'étain.

5. Procédé selon la revendication 1 ou 2, caractérisé en ce que l'alliage précité comprend de 10 à 15 % en poids d'étain.

6. Procédé selon l'une des revendications 1 à 5, caractérisé en ce que l'alliage précité est un alliage binaire palladium-étain.

7. Procédé selon l'une des revendications 1 à 5, caractérisé en ce que l'alliage précité est un alliage ternaire palladium-platine-étain.

8. Procédé selon l'une des revendications 1 à 5, caractérisé en ce que l'alliage précité est un alliage ternaire palladium-étain-ruthénium.

9. Procédé selon l'une des revendications 1 à 3, caractérisé en ce que l'alliage précité est choisi parmi les alliages suivants :
palladium 90-étain 10 ;
palladium 80-étain 10-ruthénium 10

10. Utilisation d'un alliage constitué essentiellement, en poids, de 45 à 98 % de palladium, de 2 à 20 % d'étain, de 0 à 50 % de platine, de 0 à 20 % de rhodium, de 0 à 20 % d'iridium et de 0 à 20 % de ruthénium, le total des constituants de l'alliage étant de 100 %, pour la fabrication dans l'industrie verrière de pièces en contact avec le verre fondu.

11. Pièces utilisées dans l'industrie verrière, susceptibles d'être en contact avec le verre fondu, caractérisées en ce qu'elles sont réalisées au moins partiellement, notamment au niveau des parties susceptibles d'être en contact avec le verre fondu en un alliage, éventuellement renforcé par une phase dispersée, comprenant en poids, de 45 à 98 % de palladium, de 2 à 20 % d'étain, de 0 à 50 % de platine, de 0 à 20 % de rhodium, de 0 à 20 % d'iridium et de 0 à 20 % de ruthénium, le total des constituants de l'alliage étant de 100 %.

## Claims

1. Process for the protection against corrosion by molten glass of components used in the glass industry, characterized in that it consists in producing at least some parts of said components, especially the parts which may come into contact with molten glass, in an alloy, optionally reinforced by means of a disperse phase, comprising 45 to 98 % of palladium, 2 to 20 % of tin, 0 to 50 % of platinum, 0 to 20 % of rhodium, 0 to 20 % of iridium and 0 to 20 % of ruthenium, by weight, these constituents of the alloy making a total of 100 %.

2. Process according to claim 1, characterized in that said alloy comprises 80 to 95 % by weight of palladium.

3. Process according to claim 1 or 2, characterized in that said alloy comprises 5 to 18 % by weight of tin.

4. Process according to claim 1 or 2, characterized in that said alloy comprises 5 to 16 % by weight of tin.

5. Process according to claim 1 or 2, characterized in that said alloy comprises 10 to 15 % by weight of tin.

6. Process according to one of claims 1 to 5, characterized in that said alloy is a palladium-tin binary alloy.

7. Process according to one of claims 1 to 5, characterized in that said alloy is a palladium-platinum-tin ternary alloy.

8. Process according to one of claims 1 to 5, characterized in that said alloy is a palladium-tin-ruthenium ternary alloy.

9. Process according to one of claims 1 to 3, characterized in that said alloy is selected among the following alloys:
palladium 90-tin 10
palladium 80-tin 10-ruthenium 10

10. Use of an alloy essentially constituted of 45 to 98 % of palladium, 2 to 20 % of tin, 0 to 50 % of platinum, 0 to 20 % of rhodium, 0 to 20 % of iridium and 0 to 20 % of ruthenium, by weight, these constituents of the alloy making a total of 100 % for the production in the glass industry of components in contact with molten glass.

11. Components used in the glass industry which may come into contact with molten glass, characterized in that they are produced at least in part, especially the parts which may come into contact with molten glass, in an alloy, optionally reinforced by means of a disperse phase, comprising 45 to 98 % of palladium, 2 to 20 % of tin, 0 to 50 % of platinum, 0 to 20 % of rhodium, 0 to 20 % of iridium and 0 to 20 % of ruthenium, by weight, these constituents of the alloy making a total of 100 %.

**Patentansprüche**

1. Verfahren zum Schutz von in der Glasindustrie verwendeten Bauteilen gegen die Korrosion durch das geschmolzene Glas,

   dadurch **gekennzeichnet,**

   daß es darin besteht, die Bauteile wenigstens teilweise, besonders auf Höhe der Bereiche, die im Kontakt mit dem geschmolzenen Glas sein können, aus einer, gegebenenfalls durch eine dispergierte Phase verstärkten, Legierung herzustellen, die gewichtsmäßig aus 45 bis 98 % Palladium, 2 bis 20 % Zinn, 0 bis 50 % Platin, 0 bis 20 % Rhodium, 0 bis 20 % Iridium und 0 bis 20 % Ruthenium besteht, wobei die Gesamtheit der Bestandteile der Legierung 100 % beträgt.

2. Verfahren nach dem Anspruch 1,
   dadurch gekennzeichnet,
   daß die genannte Legierung 80 bis 95 Gew.% Palladium enthält.

3. Verfahren nach dem Anspruch 1 oder 2,
   dadurch gekennzeichnet,
   daß die genannte Legierung 5 bis 18 Gew.% Zinn enthält.

4. Verfahren nach dem Anspruch 1 oder 2,
   dadurch gekennzeichnet,
   daß die genannte Legierung 5 bis 16 Gew.% Zinn enthält.

5. Verfahren nach dem Anspruch 1 oder 2,
   dadurch gekennzeichnet,
   daß die genannte Legierung 10 bis 15 Gew.% Zinn enthält.

6. Verfahren nach einem der Ansprüche 1 bis 5,
   dadurch gekennzeichnet,
   daß die genannte Legierung eine binäre Palladium-Zinn-Legierung ist.

7. Verfahren nach einem der Ansprüche 1 bis 5,
   dadurch gekennzeichnet,
   daß die genannte Legierung eine ternäre Palladium-Platin-Zinn-Legierung ist.

8. Verfahren nach einem der Ansprüche 1 bis 5,
   dadurch gekennzeichnet,
   daß die genannte Legierung eine ternäre Palladium-Zinn-Ruthenium-Legierung ist.

9. Verfahren nach einem der Ansprüche 1 bis 3,
   dadurch gekennzeichnet,
   daß die genannte Legierung unter den folgenden Legierungen gewählt wird:
   Palladium 90 - Zinn 10;
   Palladium 80 - Zinn 10 - Ruthenium 10.

10. Verwendung einer Legierung, die im wesentlichen gewichtsmäßig aus 45 bis 98 % Palladium, 2 bis 20 % Zinn, 0 bis 50 % Platin, 0 bis 20 % Rhodium, 0 bis 20 % Iridium und 0 bis 20 % Ruthenium zusammengesetzt ist, wobei die Gesamtheit der Bestandteile der Legierung 100 % ist, zur Herstellung in der Glasindustrie von Bauteilen im Kontakt mit dem geschmolzenen Glas.

11. In der Glasindustrie verwendete Bauteile, die im Kontakt mit dem geschmolzenen Glas sein können,
    dadurch gekennzeichnet,
    daß sie wenigstens teilweise, besonders auf Höhe der Bereiche, die im Kontakt mit dem geschmolzenen Glas sein können, aus einer, gegebenenfalls durch eine dispergierte Phase verstärkten Legierung hergestellt sind, die gewichtsmäßig 45 bis 98 % Palladium, 2 bis 20 % Zinn, 0 bis 50 % Platin, 0 bis 20 % Rhodium, 0 bis 20 % Iridium und 0 bis 20 % Ruthenium enthält, wobei die Gesamtheit der Bestandteile der Legierung 100 % beträgt.